# EUROPEAN PATENT APPLICATION

(11) **EP 4 644 137 A1**
(43) Date of publication of application: **05.11.2025**
(21) Application number: 22969749.5
(22) Date of filing: 30.12.2022
(51) Int. Cl.: B60C 23/04

(54) **TIRE-PRESSURE PROGRAMMING METHOD AND APPARATUS, AND COMPUTER DEVICE AND STORAGE MEDIUM**

(30) Priority: 27.12.2022 CN 202211684770
(71) Applicant: Thinkcar Tech Co., Ltd., Shenzhen, Guangdong 518000 (CN)
(72) Inventor: XIE, Jiafeng, Shenzhen, Guangdong 518000 (CN); ZHANG, Wei, Shenzhen, Guangdong 518000 (CN)
(74) Representative: Herrero & Asociados, S.L.
(86) International application number: PCT/CN2022/143824
(87) International publication number: WO 2024/138604

(57) **Abstract**

The present application relates to the field of automotive diagnostic technology and discloses a tire pressure programming method, apparatus, computer device, and storage media. The method includes: receiving an automatic programming instruction sent by a smart terminal, wherein the automatic programming instruction is used to program a tire pressure sensor of a designated tire; detecting a programming condition based on the automatic programming instruction; determining whether the programming condition satisfies an automatic programming criterion; and in response to the programming condition satisfying the automatic programming criterion, obtaining an automatic matching measure associated with the programming condition, and executing the automatic matching measure to complete automatic programming of the tire pressure sensor. The present application improves the convenience of tire pressure programming in vehicles.

## Description

The present application claims the benefit of Chinese Patent Application No. 202211684770.3, filed on December 27, 2022, titled "Tire Pressure Programming Method, Apparatus, Computer Device, and Storage Media", the contents of which are incorporated herein by reference in their entirety.

### Technical Field

The present application relates to the field of automobile diagnostic technology, and more particularly, to a tire pressure programming method, apparatus, computer device, and storage media.

### Background

With the advancement of society, the penetration rate of automobiles has increased significantly, leading to a substantial rise in the demand for tire pressure monitoring. Tire pressure monitoring requires the installation of corresponding tire pressure sensors, which in turn necessitates the use of appropriate programming devices.

Currently, most available programming devices on the market are handheld terminals. Users operate these devices to perform functions such as activation and matching. However, the inventors have observed that in order to support such operations, the programming devices must be equipped with function keys, display screens, and other components, resulting in relatively large device sizes that are inconvenient to carry. In addition, the matching process often requires multiple user interactions, making the operation cumbersome.

### Summary of the Invention

In view of the above technical issues, there is a need to provide a tire pressure programming method, apparatus, computer device, and storage media to enhance the ease of use of the programming apparatus.

In one aspect, a tire pressure programming method is provided, the method comprising:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and
in response to the programming condition satisfying the automatic programming criterion, obtaining an automatic matching measure associated with the programming condition, and executing the automatic matching measure to complete automatic programming of the tire pressure sensor.

In another aspect, a tire pressure programming apparatus, comprising:
an instruction receiving module, configured to receive an automatic programming instruction sent by a smart terminal, wherein the automatic programming instruction is used to program a tire pressure sensor of a designated tire;
a condition detection module, configured to detect a programming condition based on the automatic programming instruction;
a criterion determination module, configured to determine whether the programming condition satisfies an automatic programming criterion; and
an automatic programming module, configured to, in response to the programming condition satisfying the automatic programming criterion, obtain an automatic matching measure associated with the programming condition and execute the automatic matching measure to complete automatic programming of the tire pressure sensor.

In another aspect, a computer device is provided, comprising a memory, a processor, and computer-readable instructions stored in the memory and executable by the processor, wherein the processor is configured, when executing the computer-readable instructions, to perform the following steps:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and

in response to the programming condition satisfying the automatic programming criterion, obtaining an automatic matching measure associated with the programming condition, and executing the automatic matching measure to complete automatic programming of the tire pressure sensor.

In another aspect, one or more non-transitory computer-readable storage media are provided, storing computer-readable instructions which, when executed by one or more processors, cause the one or more processors to perform the following steps:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and
in response to the programming condition satisfying the automatic programming criterion, obtaining an automatic matching measure associated with the programming condition, and executing the automatic matching measure to complete automatic programming of the tire pressure sensor.

The above-described Tire Pressure Programming Method, Apparatus, Computer Device, and Storage Media enables the smart terminal to send automatic programming instructions, significantly reducing the size of the tire pressure programming apparatus while enhancing its functionality. This results in improved portability and functional convenience. By enabling automatic detection of the programming condition, automatic determination of whether the programming condition satisfies the automatic programming criterion, and automatic execution of the automatic matching measure, the programming time for the tire pressure sensor is greatly reduced. Therefore, the present disclosure improves the overall convenience and efficiency of the tire pressure programming apparatus.

Details of one or more embodiments of the present application are provided in the following description and accompanying drawings. Other features and advantages will become apparent from the description, the drawings, and the appended claims.

### Brief description of the drawings

To clearly illustrate the technical solutions of the embodiments of this application, the following briefly introduces the accompanying drawings used in the description of the embodiments. Obviously, the drawings in the following description are only some embodiments of this application. For those skilled in the art, other drawings can be obtained based on these drawings without creative effort.
Fig. 1 is a flowchart illustrating a tire pressure programming method according to an embodiment of the present application.
Fig. 2 is a schematic structural diagram of a tire pressure programming apparatus according to an embodiment of the present application.
Fig. 3 is a schematic diagram of a computer device according to an embodiment of the present application.

### Detailed description of preferred embodiments

The technical solutions in the embodiments of the present application will be clearly and completely described below with reference to the drawings in the embodiments of this application. Obviously, the described embodiments are merely part of the embodiments of this application, not all of them. Based on the embodiments in this application, all other embodiments obtained by those of ordinary skill in the art without creative effort belong to the protection scope of this application.

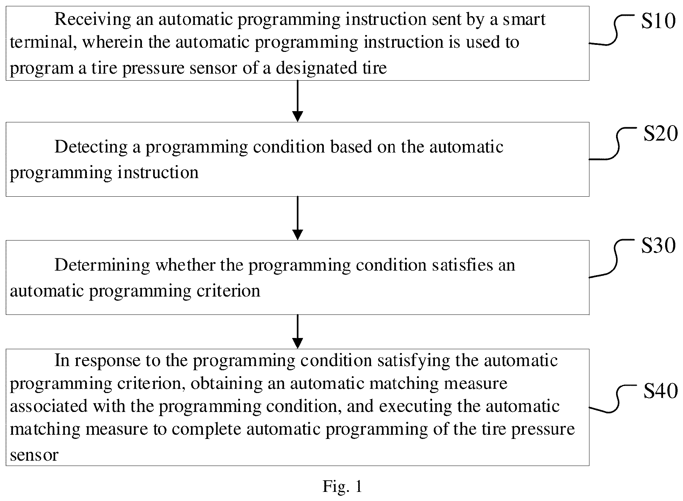

According to one embodiment, and with reference to Fig. 1, a tire pressure programming method is provided, comprising steps S10 through S40.

S10: Receiving an automatic programming instruction sent by a smart terminal, wherein the automatic programming instruction is used to program a tire pressure sensor of a designated tire.

It is understood that the tire pressure programming method provided in this embodiment may be applied to a tire pressure programming apparatus. The tire pressure programming apparatus is configured to receive automatic programming instructions from a smart terminal. The tire pressure programming apparatus, in this context, refers to a matching tool capable of programming a tire pressure sensor.

The smart terminal may refer to a smartphone, tablet, or similar device. The automatic programming instruction is used to automatically program the tire pressure sensor when certain automatic programming criterions are met, thereby achieving automatic matching of the tire pressure sensor. The smart terminal is installed with control software for the tire pressure programming apparatus, which is used to issue the automatic programming instruction. A user can control the tire pressure programming apparatus via the control software on the smart terminal to program the tire pressure sensor. Therefore, the tire pressure programming apparatus does not require excessive functional buttons or display screens, allowing the device to be more compact and portable. Before generating the automatic programming instruction, the user may specify the designated tire to be bound to the tire pressure sensor via the control software. The designated tire refers to the tire to be monitored by the tire pressure sensor, such as the front-left, rear-left, front-right, or rear-right tire.

S20: Detecting a programming condition based on the automatic programming instruction.

It should be understood that the automatic programming instruction is a composite instruction, automatically issued by the tire pressure programming apparatus. When detecting the programming condition, the sub-instructions included in the automatic programming instruction are primarily used to establish connections with the tire pressure sensor and the vehicle-mounted system, and to respectively obtain the first ID of the tire pressure sensor and the second ID recorded in the vehicle-mounted system and associated with the designated tire. In other words, the programming condition includes the connection status between the tire pressure programming apparatus and other devices, as well as the obtained ID data (including the first ID and the second ID).

S30: Determining whether the programming condition satisfies an automatic programming criterion.

It should be understood that the automatic programming criterion may be configured as needed. The automatic programming criterion may vary depending on the specific model of the tire pressure programming apparatus. When the programming condition allows the tire pressure programming apparatus to perform automatic programming, the automatic programming criterion is deemed to be satisfied. If the programming condition does not satisfy the automatic programming criterion, the tire pressure programming apparatus switches to a manual mode. In this case, the user sends control instructions to the tire pressure programming apparatus one by one via the smart terminal. The manual mode allows the user to perform manual configuration and debugging conveniently.

S40: In response to the programming condition satisfying the automatic programming criterion, obtaining an automatic matching measure associated with the programming condition, and executing the automatic matching measure to complete automatic programming of the tire pressure sensor.

It is understood that when the programming condition meets the automatic programming criteria, obtaining and executing the automatic matching measures associated with the programming condition can complete the automatic programming of the tire pressure sensor. Different programming conditions correspond to different automatic matching measures.

Through steps S10 to S40, the automatic programming instruction is sent via the smart terminal, which significantly reduces the size of the tire pressure programming apparatus while enhancing its functionality, thereby providing both portability and ease of use. Moreover, the automatic detection of programming conditions, automatic determination of whether the programming condition is met, and automatic execution of matching measures greatly reduce the programming time of the tire pressure sensor, thereby improving time efficiency. Therefore, this embodiment enhances the overall convenience of the tire pressure programming apparatus.

Optionally, prior to Step S10, i.e., before receiving the automatic programming instruction sent by the smart terminal for programming the tire pressure sensor, the method further comprises:
S11: Establishing a connection with the smart terminal via a wired and/or wireless manner.

It is understood that the tire pressure programming apparatus can establish a connection with the smart terminal via wired and/or wireless means. The wired connection may involve a data cable-for example, the apparatus may be equipped with a USB or Type-C port for direct connection to the smart terminal. Wireless connections may include, but are not limited to, Wi-Fi or Bluetooth. In one example, the tire pressure programming apparatus may be designed as a small square block, with a connection QR code printed on one side. The user can scan this QR code to establish a connection with the apparatus.

This embodiment enables the tire pressure programming apparatus to be connected to a smart terminal, allowing the smart terminal to control the apparatus. This design helps reduce the overall size of the programming device, improving its portability.

Optionally, Step S20, i.e., detecting a programming condition based on the automatic programming instruction, comprises:
S201: Sending an activation instruction to the tire pressure sensor via an RF unit to cause the tire pressure sensor to enter an activated state;
S202: Sending a first read-code instruction to the tire pressure sensor via the RF unit to obtain a first ID of the tire pressure sensor; and/or
S203: Establishing a connection with a vehicle-mounted system via a wired and/or wireless manner;
S204: Sending a second read-code instruction to the vehicle-mounted system to obtain a second ID of the tire pressure sensor associated with the designated tire as recorded in the vehicle-mounted system; or
S205: Receiving, from the smart terminal, the second ID of the tire pressure sensor associated with the designated tire as recorded in the vehicle-mounted system

It is understood that the tire pressure programming apparatus is equipped with a radio frequency (RF) unit. The RF unit can perform functions such as activating, reading, and programming the tire pressure sensor. Specifically, it can activate the tire pressure sensor to place it in an active state and read the first ID of the tire pressure sensor. The tire pressure programming apparatus can also establish a connection with the in-vehicle-mounted system (i.e., the vehicle ECU, or electronic control unit) via wired and/or wireless means. A wired connection may involve the use of a data cable-for example, the apparatus may be equipped with a USB or Type-C interface for connecting to the vehicle terminal. Wireless connections may include, but are not limited to, Wi-Fi and Bluetooth. Once the tire pressure programming apparatus is connected to the in-vehicle-mounted system, it can retrieve a second ID from the vehicle ECU, which is pre-stored and associated with the designated tire. For example, if the programming is being conducted for the left front tire, the apparatus can obtain the second ID corresponding to the tire pressure sensor previously associated with the left front tire in the vehicle-mounted system.

In some examples, the second ID may also be obtained via the smart terminal. Specifically, the smart terminal first retrieves the second ID of the tire pressure sensor-pre-stored in the in-vehicle-mounted system and associated with the designated tire-and then transmits the second ID to the tire pressure programming apparatus.

This embodiment enables activation of the tire pressure sensor, establishment of a connection with the vehicle terminal, and acquisition of both the first ID and the second ID.

Optionally, Step S30, i.e., determining whether the programming condition satisfies an automatic programming criterion, comprises:
S301: In a case where the second ID cannot be obtained and the vehicle-mounted system is not connected, determining that the programming condition does not satisfy the automatic programming criterion;
S302: Otherwise, determining that the programming condition satisfies the automatic programming criterion.

It is understood that the purpose of automatic programming is to ensure consistency between the first ID of the tire pressure sensor and the second ID stored in the vehicle-mounted system. If the programming condition allows the first and second IDs to be made consistent, the programming condition is determined to satisfy the automatic programming criterion. If consistency between the first ID and the second ID cannot be achieved under the programming condition, the programming condition is deemed not to satisfy the automatic programming criterion.

Specifically, if the second ID is known, the second ID can be directly written into the tire pressure sensor without modifying the second ID stored in the vehicle-mounted system, thereby achieving consistency between the two locations. In this case, the automatic programming criterion is satisfied. If the second ID is unknown, the first ID or a third ID (a custom-generated ID) must be written into the vehicle-mounted system. Therefore, a connection with the vehicle-mounted system is required in order to meet the automatic programming criterion.

In this embodiment, the automatic programming criterion can be autonomously determined, thereby greatly reducing the programming time and enhancing programming efficiency.

Optionally, the programming condition comprises: obtaining a second ID of the tire pressure sensor associated with the designated tire as recorded in the vehicle-mounted system;

Optionally, Step S40, i.e., obtaining an automatic matching measure associated with the programming condition, and executing the automatic matching measure to complete automatic programming of the tire pressure sensor, comprises:
S401: In a case where the second ID is not null, generating a first programming instruction comprising the second ID;
S402: Sending the first programming instruction to the tire pressure sensor via an RF unit to write the second ID into the tire pressure sensor.

It is understood that if the second ID is known to be not null, it can be directly written into the tire pressure sensor without modifying the second ID stored in the vehicle-mounted system, thereby achieving ID consistency between the two locations.

In this embodiment, the programming of the tire pressure sensor can be autonomously realized, thereby greatly reducing the programming time and enhancing programming efficiency.

Optionally, the programming condition comprises: obtaining a first ID of the tire pressure sensor; and failing to obtain a second ID of the tire pressure sensor associated with the designated tire as recorded in the vehicle-mounted system;
S40: Obtaining an automatic matching measure associated with the programming condition; and executing the automatic matching measure to complete automatic programming of the tire pressure sensor. This step comprises:
S403: In a case where the second ID is null and the first ID is not null, generating a first modification instruction comprising the first ID;
S404: Sending the first modification instruction to a vehicle-mounted system to set, via the first modification instruction, an ID of the tire pressure sensor associated with the designated tire in the vehicle-mounted system to the first ID.

It is understood that if the second ID is known to be null and the first ID is not null, the first ID is directly written into the vehicle-mounted system without changing the first ID in the tire pressure sensor, thereby achieving consistency of the IDs between the two locations.

In this embodiment, the programming of the vehicle-mounted system can be autonomously realized, thereby significantly reducing programming time and improving programming efficiency.

Optionally, the programming condition comprises: failing to obtain a first ID of the tire pressure sensor; and failing to obtain a second ID of the tire pressure sensor associated with the designated tire as recorded in the vehicle-mounted system;
S40: Obtaining an automatic matching measure associated with the programming condition; and executing the automatic matching measure to complete automatic programming of the tire pressure sensor. This step comprises:
S405: In a case where both the first ID and the second ID are null, generating a third ID according to a preset coding rule;
S406: Generating a second programming instruction and a second modification instruction, each comprising the third ID;
S407: Sending the second programming instruction to the tire pressure sensor via an RF unit to write the third ID into the tire pressure sensor; and
S408: Sending the second modification instruction to a vehicle-mounted system to set, via the second modification instruction, an ID of the tire pressure sensor associated with the designated tire in the vehicle-mounted system to the third ID.

It is understood that if both the second ID and the first ID are known to be null, a third ID can be generated according to a preset encoding rule. The third ID is then written into both the tire pressure sensor and the vehicle-mounted system, thereby achieving consistency of the ID between the two locations.

This embodiment can automatically implement programming of both the tire pressure sensor and the vehicle system, In this embodiment, the programming of both the tire pressure sensor and the vehicle-mounted system can be autonomously realized, thereby greatly shortening programming time and improving programming efficiency.

It should be understood that the numerical labels of the steps in the above embodiments do not imply any particular order of execution. The sequence of the processes should be determined based on their functions and internal logic, and should not be construed as limiting the implementation of the embodiments of the present application in any way.

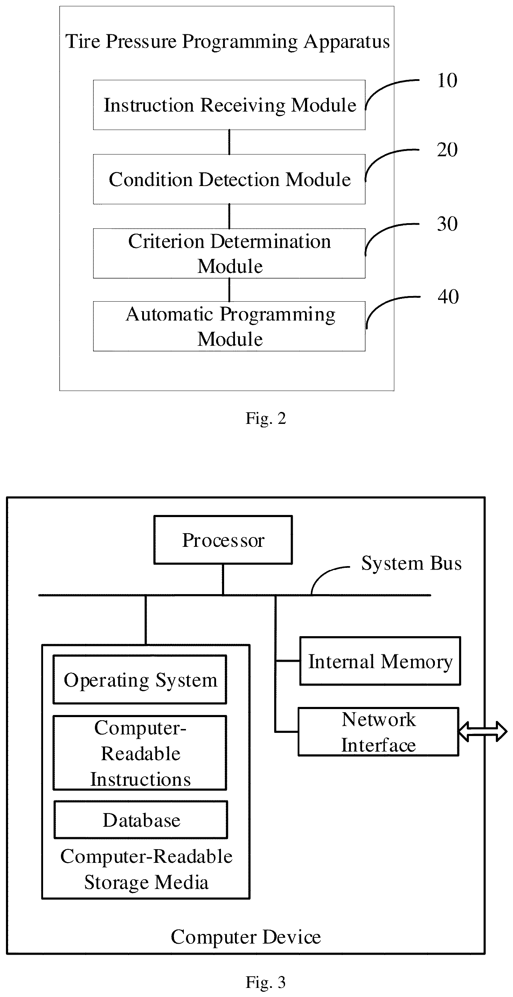

In one embodiment, a tire pressure programming apparatus is provided, corresponding directly to the tire pressure programming method described in the foregoing embodiments. As illustrated in Fig. 2, the apparatus comprises an instruction receiving module 10, a condition detection module 20, a criterion determination module 30, and an automatic programming module 40. Detailed descriptions of each functional module are provided below:
the instruction receiving module 10 is configured to receive an automatic programming instruction sent by a smart terminal, wherein the automatic programming instruction is used to program a tire pressure sensor of a designated tire;
the condition detection module 20 is configured to detect a programming condition based on the automatic programming instruction;
the criterion determination module 30 is configured to determine whether the programming condition satisfies an automatic programming criterion; and
the automatic programming module 40 is configured to, in response to the programming condition satisfying the automatic programming criterion, obtain an automatic matching measure associated with the programming condition and execute the automatic matching measure to complete automatic programming of the tire pressure sensor.

Optionally, the tire pressure programming apparatus further comprises:
a connection module, configured to establish a connection with the smart terminal via a wired and/or wireless manner.

Optionally, the condition detection module 20 comprises:
an RF unit, configured to send an activation instruction to the tire pressure sensor to cause the tire pressure sensor to enter an activated state;
wherein the RF unit further configured to send a first read-code instruction to the tire pressure sensor to obtain a first ID of the tire pressure sensor; and/or
a vehicle-mounted system connection unit, configured to establishing a connection with a vehicle-mounted system via a wired and/or wireless manner;
a vehicle-mounted system read-code unit, configured to send a second read-code instruction to the vehicle-mounted system to obtain a second ID of the tire pressure sensor associated with the designated tire as recorded in the vehicle-mounted system; or
a second ID receiving unit, configured to receive the second ID from the smart terminal, wherein the second ID is recorded in the vehicle-mounted system and associated with the designated tire.

Optionally, the criterion determination module 30 comprises:
a non-satisfaction unit, configured to determine that the programming condition does not satisfy the automatic programming criterion when the second ID cannot be obtained and the vehicle-mounted system is not connected; and
a satisfaction unit, configured to otherwise determine that the programming condition satisfies the automatic programming criterion.

Optionally, the programming condition comprises:
obtaining a second ID of the tire pressure sensor associated with the designated tire as recorded in the vehicle-mounted system;
the automatic programming module 40 comprises:
   a first programming instruction generation unit, configured to generate a first programming instruction comprising the second ID when the second ID is not null; and
   a first tire pressure sensor writing unit, configured to send the first programming instruction to the tire pressure sensor via an RF unit to write the second ID into the tire pressure sensor.

Optionally, the programming condition comprises:
obtaining a first ID of the tire pressure sensor; and failing to obtain a second ID of the tire pressure sensor associated with the designated tire as recorded in the vehicle-mounted system;
the automatic programming module 40 comprises:
   a first modification instruction generation unit, configured to generate a first modification instruction comprising the first ID when the second ID is null and the first ID is not null; and
   a first vehicle-mounted system writing unit, configured to send the first modification instruction to a vehicle-mounted system to set, via the first modification instruction, an ID of the tire pressure sensor associated with the designated tire in the vehicle-mounted system to the first ID.

Optionally, the programming condition comprises:
failing to obtain a first ID of the tire pressure sensor; and failing to obtain a second ID of the tire pressure sensor associated with the designated tire as recorded in the vehicle-mounted system;
the automatic programming module 40 comprises:
   a third ID generation unit, configured to generate a third ID according to a preset coding rule when both the first ID and the second ID are null;
   a second instruction generation unit, configured to generate a second programming instruction and a second modification instruction, each comprising the third ID;
   a second tire pressure sensor writing unit, configured to send the second programming instruction to the tire pressure sensor via an RF unit to write the third ID into the tire pressure sensor; and
   a second vehicle-mounted system writing unit, configured to send the second modification instruction to a vehicle-mounted system to set, via the second modification instruction, an ID of the tire pressure sensor associated with the designated tire in the vehicle-mounted system to the third ID.

The specific definitions of the tire pressure programming apparatus may be referenced from the above-described tire pressure programming method and will not be repeated herein. The modules of the tire pressure programming apparatus may be implemented in whole or in part through software, hardware, or a combination thereof. These modules may be embedded in the processor of a computer device or implemented independently in hardware. Alternatively, the modules may be stored as software in a memory of the computer device, allowing the processor to invoke and execute operations corresponding to the respective modules.

In one embodiment, a computer device is provided, which may be a terminal. Its internal structure is illustrated in Fig. 3. The computer device includes a processor, a memory, a network interface, and a database, all connected via a system bus. The processor of the computer device is configured to provide computing and control capabilities. The memory includes computer-readable storage media and an internal memory. The computer-readable storage media store an operating system, computer-readable instructions, and a database. The internal memory provides an environment for running the operating system and computer-readable instructions stored in the storage media. The database of the computer device is configured to store data related to the tire pressure programming method. The network interface allows communication between the computer device and external terminals over a network. When executed by the processor, the computer-readable instructions implement the tire pressure programming method. The computer-readable storage media provided in this embodiment include both non-volatile and volatile computer-readable storage media.

In one embodiment, a computer device is provided, comprising a memory, a processor, and computer-readable instructions stored in the memory and executable by the processor, wherein the processor is configured, when executing the computer-readable instructions, to perform the following steps:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and
in response to the programming condition satisfying the automatic programming criterion, obtaining an automatic matching measure associated with the programming condition, and executing the automatic matching measure to complete automatic programming of the tire pressure sensor.

In one embodiment, one or more computer-readable storage media are provided. The computer-readable storage media include non-transitory computer-readable storage media and transitory computer-readable storage media. The computer-readable storage media store computer-readable instructions which, when executed by one or more processors, cause the one or more processors to perform the following steps:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and
in response to the programming condition satisfying the automatic programming criterion, obtaining an automatic matching measure associated with the programming condition, and executing the automatic matching measure to complete automatic programming of the tire pressure sensor.

A person of ordinary skill in the art can understand that all or part of the processes in the method of the foregoing embodiments can be implemented by instructing related hardware through computer readable instructions, which can be stored in a nonvolatile computer readable storage medium, and the computer readable instructions can include the steps of the above embodiments. Wherein, any reference to memory, storage, database or other medium used in the embodiments provided in this application may include nonvolatile and/or volatile memory. The nonvolatile memory may include read-only memory (ROM), programmable ROM (PROM), electrically programmable ROM (EPROM), electrically erasable programmable ROM (EEPROM), or flash memory. The volatile memory may include random access memory (RAM) or external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchronous link (Synchlink) DRAM (SLDRAM), memory bus, (Rambus) direct RAM (RDRAM), direct memory bus dynamic RAM (DRDRAM), and memory bus dynamic RAM (RDRAM), etc.

A person of ordinary skill in the art can clearly understand that, for the convenience and conciseness of description, the division of the above functional units and modules are only used as examples. In practical applications, the above functions may be implemented by different functional units and modules as needed. That is, the internal structure of the device may be divided into different functional units or modules to complete all or part of the functions described above.

The above embodiments are merely used to illustrate the technical solutions of the present application, rather than limit it. Although the application has been described in detail with reference to the foregoing embodiments, it should be understood by those skilled in the art that it is still possible to modify the technical solutions described in the foregoing embodiments, or equivalently replace some technical features thereof. These modifications and equivalents do not make the nature of the corresponding technical solution deviates from the spirit and scope of the present application, and shall be included in the protection scope of the present application.

## Claims

1. A tire pressure programming method, comprising:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and
in response to the programming condition satisfying the automatic programming criterion, obtaining an automatic matching measure associated with the programming condition, and executing the automatic matching measure to complete automatic programming of the tire pressure sensor.

2. The tire pressure programming method of claim 1,
wherein before receiving an automatic programming instruction sent by a smart terminal,
the method further comprises:
establishing a connection with the smart terminal via a wired and/or wireless manner.

3. The tire pressure programming method of claim 1,
wherein detecting a programming condition based on the automatic programming instruction comprises:
sending an activation instruction to the tire pressure sensor via an RF unit to cause the tire pressure sensor to enter an activated state;
sending a first read-code instruction to the tire pressure sensor via the RF unit to obtain a first ID of the tire pressure sensor; and/or
establishing a connection with a vehicle-mounted system via a wired and/or wireless manner;
sending a second read-code instruction to the vehicle-mounted system to obtain a second ID of the tire pressure sensor associated with the designated tire as recorded in the vehicle-mounted system; or
receiving, from the smart terminal, the second ID of the tire pressure sensor associated with the designated tire as recorded in the vehicle-mounted system.

4. The tire pressure programming method of claim 3,
wherein determining whether the programming condition satisfies an automatic programming criterion comprises:
in a case where the second ID cannot be obtained and the vehicle-mounted system is not connected, determining that the programming condition does not satisfy the automatic programming criterion;
otherwise, determining that the programming condition satisfies the automatic programming criterion.

5. The tire pressure programming method of claim 1,
wherein the programming condition comprises:
obtaining a second ID of the tire pressure sensor associated with the designated tire as recorded in the vehicle-mounted system;
wherein obtaining an automatic matching measure associated with the programming condition; and executing the automatic matching measure to complete automatic programming of the tire pressure sensor comprises:
in a case where the second ID is not null, generating a first programming instruction comprising the second ID; and
sending the first programming instruction to the tire pressure sensor via an RF unit to write the second ID into the tire pressure sensor.

6. The tire pressure programming method of claim 1,
wherein the programming condition comprises:
obtaining a first ID of the tire pressure sensor; and failing to obtain a second ID of the tire pressure sensor associated with the designated tire as recorded in the vehicle-mounted system;
wherein obtaining an automatic matching measure associated with the programming condition; and executing the automatic matching measure to complete automatic programming of the tire pressure sensor comprises:
in a case where the second ID is null and the first ID is not null, generating a first modification instruction comprising the first ID; and
sending the first modification instruction to a vehicle-mounted system to set, via the first modification instruction, an ID of the tire pressure sensor associated with the designated tire in the vehicle-mounted system to the first ID.

7. The tire pressure programming method of claim 1,
wherein the programming condition comprises:
failing to obtain a first ID of the tire pressure sensor; and failing to obtain a second ID of the tire pressure sensor associated with the designated tire as recorded in the vehicle-mounted system;
wherein obtaining an automatic matching measure associated with the programming condition; and executing the automatic matching measure to complete automatic programming of the tire pressure sensor comprises:
in a case where both the first ID and the second ID are null, generating a third ID according to a preset coding rule;
generating a second programming instruction and a second modification instruction, each comprising the third ID;
sending the second programming instruction to the tire pressure sensor via an RF unit to write the third ID into the tire pressure sensor; and
sending the second modification instruction to a vehicle-mounted system to set, via the second modification instruction, an ID of the tire pressure sensor associated with the designated tire in the vehicle-mounted system to the third ID.

8. A tire pressure programming apparatus, comprising:
an instruction receiving module, configured to receive an automatic programming instruction sent by a smart terminal, wherein the automatic programming instruction is used to program a tire pressure sensor of a designated tire;
a condition detection module, configured to detect a programming condition based on the automatic programming instruction;
a criterion determination module, configured to determine whether the programming condition satisfies an automatic programming criterion; and
an automatic programming module, configured to, in response to the programming condition satisfying the automatic programming criterion, obtain an automatic matching measure associated with the programming condition and execute the automatic matching measure to complete automatic programming of the tire pressure sensor.

9. The tire pressure programming apparatus of claim 8, further comprising
a connection module, configured to establish a connection with the smart terminal via a wired and/or wireless manner.

10. The tire pressure programming apparatus of claim 8,
wherein the condition detection module comprises:
an RF unit, configured to send an activation instruction to the tire pressure sensor to cause the tire pressure sensor to enter an activated state;
wherein the RF unit further configured to send a first read-code instruction to the tire pressure sensor to obtain a first ID of the tire pressure sensor; and/or
a vehicle-mounted system connection unit, configured to establishing a connection with a vehicle-mounted system via a wired and/or wireless manner;
a vehicle-mounted system read-code unit, configured to send a second read-code instruction to the vehicle-mounted system to obtain a second ID of the tire pressure sensor associated with the designated tire as recorded in the vehicle-mounted system; or
a second ID receiving unit, configured to receive the second ID from the smart terminal, wherein the second ID is recorded in the vehicle-mounted system and associated with the designated tire.

11. The tire pressure programming apparatus of claim 10,
wherein the criterion determination module comprises:
a non-satisfaction unit, configured to determine that the programming condition does not satisfy the automatic programming criterion when the second ID cannot be obtained and the vehicle-mounted system is not connected; and
a satisfaction unit, configured to otherwise determine that the programming condition satisfies the automatic programming criterion.

12. The tire pressure programming apparatus of claim 8,
wherein the programming condition comprises:
obtaining a second ID of the tire pressure sensor associated with the designated tire as recorded in the vehicle-mounted system;
wherein the automatic programming module comprises:
a first programming instruction generation unit, configured to generate a first programming instruction comprising the second ID when the second ID is not null; and
a first tire pressure sensor writing unit, configured to send the first programming instruction to the tire pressure sensor via an RF unit to write the second ID into the tire pressure sensor.

13. The tire pressure programming apparatus of claim 8,
wherein the programming condition comprises:
obtaining a first ID of the tire pressure sensor; and failing to obtain a second ID of the tire pressure sensor associated with the designated tire as recorded in the vehicle-mounted system;
wherein the automatic programming module comprises:
a first modification instruction generation unit, configured to generate a first modification instruction comprising the first ID when the second ID is null and the first ID is not null; and
a first vehicle-mounted system writing unit, configured to send the first modification instruction to a vehicle-mounted system to set, via the first modification instruction, an ID of the tire pressure sensor associated with the designated tire in the vehicle-mounted system to the first ID.

14. The tire pressure programming apparatus of claim 8,
wherein the programming condition comprises:
failing to obtain a first ID of the tire pressure sensor; and failing to obtain a second ID of the tire pressure sensor associated with the designated tire as recorded in the vehicle-mounted system;
wherein the automatic programming module comprises:
a third ID generation unit, configured to generate a third ID according to a preset coding rule when both the first ID and the second ID are null;
a second instruction generation unit, configured to generate a second programming instruction and a second modification instruction, each comprising the third ID;
a second tire pressure sensor writing unit, configured to send the second programming instruction to the tire pressure sensor via an RF unit to write the third ID into the tire pressure sensor; and
a second vehicle-mounted system writing unit, configured to send the second modification instruction to a vehicle-mounted system to set, via the second modification instruction, an ID of the tire pressure sensor associated with the designated tire in the vehicle-mounted system to the third ID.

15. A computer device, comprising a memory, a processor, and computer-readable instructions stored in the memory and executable by the processor, wherein the processor is configured, when executing the computer-readable instructions, to perform the following steps:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and
in response to the programming condition satisfying the automatic programming criterion, obtaining an automatic matching measure associated with the programming condition, and executing the automatic matching measure to complete automatic programming of the tire pressure sensor.

16. The computer device of claim 15,
wherein before receiving an automatic programming instruction sent by a smart terminal,
the processor is further configured to perform the following step:
establishing a connection with the smart terminal via a wired and/or wireless manner.

17. The computer device of claim 15,
wherein detecting a programming condition based on the automatic programming instruction comprises:
sending an activation instruction to the tire pressure sensor via an RF unit to cause the tire pressure sensor to enter an activated state;
sending a first read-code instruction to the tire pressure sensor via the RF unit to obtain a first ID of the tire pressure sensor; and/or
establishing a connection with a vehicle-mounted system via a wired and/or wireless manner;
sending a second read-code instruction to the vehicle-mounted system to obtain a second ID of the tire pressure sensor associated with the designated tire as recorded in the vehicle-mounted system; or
receiving, from the smart terminal, the second ID of the tire pressure sensor associated with the designated tire as recorded in the vehicle-mounted system.

18. One or more computer-readable storage media storing computer-readable instructions which, when executed by one or more processors, cause the one or more processors to perform the following steps:
receiving an automatic programming instruction sent by a smart terminal, wherein the automatic programming instruction is used to program a tire pressure sensor of a designated tire;
detecting a programming condition based on the automatic programming instruction;
determining whether the programming condition satisfies an automatic programming criterion; and
in response to the programming condition satisfying the automatic programming criterion, obtaining an automatic matching measure associated with the programming condition, and executing the automatic matching measure to complete automatic programming of the tire pressure sensor.

19. The computer-readable storage media of claim 18,
wherein before receiving an automatic programming instruction sent by a smart terminal,
the one or more processors further perform the following step:
establishing a connection with the smart terminal via a wired and/or wireless manner.

20. The computer-readable storage media of claim 18,
wherein detecting a programming condition based on the automatic programming instruction comprises:
sending an activation instruction to the tire pressure sensor via an RF unit to cause the tire pressure sensor to enter an activated state;
sending a first read-code instruction to the tire pressure sensor via the RF unit to obtain a first ID of the tire pressure sensor; and/or
establishing a connection with a vehicle-mounted system via a wired and/or wireless manner;
sending a second read-code instruction to the vehicle-mounted system to obtain a second ID of the tire pressure sensor associated with the designated tire as recorded in the vehicle-mounted system; or
receiving, from the smart terminal, the second ID of the tire pressure sensor associated with the designated tire as recorded in the vehicle-mounted system.
